Europäisches Patentamt

European Patent Office

Office européen des brevets

(11) Publication number: **0 306 027**
**A2**

# (12) EUROPEAN PATENT APPLICATION

(21) Application number: **88114292.1**

(22) Date of filing: **01.09.88**

(51) Int. Cl.⁴: **F16F 1/40 , B64C 27/35 , B64C 27/41**

(30) Priority: **04.09.87 US 93359**

(43) Date of publication of application:
**08.03.89 Bulletin 89/10**

(84) Designated Contracting States:
**DE FR GB IT NL**

(71) Applicant: **BARRY WRIGHT CORPORATION**
**1 Newton Executive Park**
**Newton Lower Falls Massachusetts**
**02162(US)**

(72) Inventor: **Finney, Robert H.**
**811 Cornish Oak Court**
**Arlington Texas 76012(US)**

(74) Representative: **Patentanwälte Grünecker,**
**Kinkeldey, Stockmair & Partner**
**Maximilianstrasse 58**
**D-8000 München 22(DE)**

(54) **Laminated bearing.**

(57) An improved bearing designed for use in a link assembly of a coupling assembly used for coupling a first member to a second member in an aircraft is disclosed. The bearing comprises a plurality of alternating layers of a resilient, elastomeric material and a non-extensible material coaxially formed around a common axis. Each of the innermost and outermost layers of is adapted to be coupled to a respective one of the members, and has at least a center portion in which each of the inner radial and outer radial surfaces of the center portion of each innermost and outermost layers is formed as a surface of revolution around the axis with a curvature having an axial cross-sectional shape defined by different centers of curvature so as to reduce the compression induced shear strain carried by the innermost and outermost layers when the layers are subjected to compression induced shear.

Fig. 1

EP 0 306 027 A2

## LAMINATED BEARING

The present invention relates generally to bearings, and more particularly to an improved laminated bearing for more effectively accommodating certain non-homokinetic, oscillatory motions of the bearing when the bearing is simultaneously in compression and shear than heretofore achieved by a spherical laminated bearing, and to an improved linking element including such a bearing for more uniformly carrying compression induced shear strain.

Voluminous literature has been published, patents issued and many products have been developed relating to or including laminated bearings. See, for example, U.S. Patent Nos. 4,208,889; 4,368,050 and 4,518,368 for couplings using such bearings. Typically, these bearings include alternating layers of a resilient, elastomeric material and a non-extensible material, with the layers usually being bonded together with a suitable bonding material. The laminated bearings are often of the "high compression" type, since the relatively hard non-extensible layers, usually made of plastic, metal, or a metal alloy (such as stainless steel), enable the bearing to carry relatively large compression loads, while the relatively soft elastomeric layers, usually made of rubber or certain plastics, enable the bearing to carry greater shear. The bearing unit is typically secured, such as bonding the unit, to opposing bearing surfaces, and accordingly, usually take the shape of the space between those surfaces.

The particular design of a laminated bearing of the type described is largely dependent upon the intended use of the bearing. The size, thickness and number of layers of each bearing and the shear modulus of each layer of elastomeric material depends, for example, on the particular compression loads to be expected and the amount of shear, due to angular misalignment between the driving and driven members, that can be tolerated. The advantages of such bearings are described in U.S. Patent No. 4,208,889, issued to Robert R. Peterson on June 24, 1980. Generally, by utilizing such bearing units, undesirable vibration can be at least partially dampened, and noise, as well as vibration induced wear and stress, can be reduced. Such bearings can be produced with greater manufacturing tolerances than equivalent conventional bearings of the ball type. The laminated bearings also substantially reduce the amount of backlash at low reverse torques applied to the driving or driven members. Due to the resiliency of the elastomeric material, each bearing provides counteracting restoring forces to uneven compression and shearing loads. Of importance, use of such laminated bearings eliminates the costly needs associated with providing lubrication between the various bearing surfaces. Further, the use of elastomeric bearings substantially eliminates all friction and heat between the various bearing surfaces, greatly reduces power losses and reduces the chances of catastrophic failure of the bearing than otherwise provided by conventional ball bearings.

Laminated bearings are particularly useful in homokinetic or constant velocity couplings, such as shown in U.S. Patent Nos. 4,368,050 and 4,518,368. In such couplings the velocity of the driving member is smoothly transmitted through the coupling to the driven member, with certain shear and little or no compressive loads. Such compressive loads are carried by the bearings when the driving member is misaligned with the driven member. In such a situation the restorative forces provided by the laminated layers will force the driving and driven members to realign themselves.

Certain applications, however, arise where the use of laminated bearings will be beneficial, but the motion of the coupling will not exhibit pure homokinetic behavior, particularly when the driving and driven members are misaligned. One such application is found in a proprotor design of a multi-service aircraft designed to take off in a helicopter mode and fly in an airplane mode.

The proprotor system of one such aircraft includes a multiple blade assembly coupled to a drive shaft. The proprotor system is adapted to pivot so that the multiple blade assembly moves between a "horizontal" rotational plane (so as to provide lift similar to the main rotor of a helicopter) and a "vertical" rotational plane (so as to provide forward thrust for the aircraft and a controllable differential pressure on the wings in order to provide lift similar to a propeller of a propeller-driven aircraft), and thus adopts its name from the contraction of the words "propeller" and "rotor". Such an aircraft is currently designed to take off vertically, with the multiple blade assembly rotating in its "horizontal" plane. When the aircraft reaches a minimum altitude, the plane of the rotating multiple blade assembly is pitched so as change the flapping angle of the multiple blade assembly. The pitched multiple blade assembly provides an initial forward thrust so that the aircraft can move in a forward direction as the rotating multiple blade assembly is pivoted towards the position where the multiple blade assembly is rotating in its vertical rotational plane.

The proprotor system also includes a proprotor hub assembly for coupling the drive shaft to the multiple blade assembly. The proprotor hub assembly includes a three-link "constant velocity" coupling including a drive trunnion coupled to the drive shaft, three vertical links, and three pillow blocks for coupling

2

the hub assembly to a yoke, which in turn couples the multiple blade assembly to the hub assembly. Each vertical link includes a pair of laminated bearings, one bearing of each link being coupled to the drive trunnion and the other being coupled to a respective one of the pillow blocks. The pair of laminated bearings of each link are disposed so that their center axes are parallel to one another and connected to the trunnion so that the center axes of the bearings are disposed on opposite sides of and in a common plane which is normal to the center drive axis of the trunnion when the proprotor is rotating in the "horizontal" plane normal to the rotation axis of the drive shaft.

The design of the proprotor hub assembly is such that when the rotation axis of the multiple blade assembly is pitched to provide initial forward thrust for the aircraft, the coupling will not exhibit pure homokinetic behavior, wherein the vertical links travel in a path which creates both compression and shear in each laminated bearing of each link. As a result, it is believed that using spherical laminated bearings (wherein each of the elastomeric layers of each bearing has spherically-shaped inner and outer surfaces all with the same center of curvature at the geometric center of the bearing) in these links would be unsatisfactory due to the bulge or compression induced shear strain carried by spherical bearings when the multiple blade assembly rotates at a flapping angle in a plane at an angle to the rotation axis of the drive shaft. Apparently, the links move up and down through the plane normal to the driving rotation axis of the drive shaft as it rotates in the inclined plane. It is believed that each link moves in the inclined plane in torsion. The kinetic deflection of the multiple blade assembly will thus cause oscillating deflection in each of the vertical links. This results in the bearing carrying an alternating compression induced shear as the multiple blade assembly moves in the inclined plane. The coupling therefore is not a true constant velocity coupling, but will closely behave like one because of the elastomeric material, since the elastomeric material can accommodate the deflection. Accordingly, elastomeric layers should be of a configuration so as to provide a compressive spring rate for the bearing which will control the force, therefore the stress, induced in the components to which each bearing is coupled, and accommodate the motions of the moving parts. Computer simulation (i.e., finite element analysis) has demonstrated that using spherical bearings (each having a plurality of elastomeric layers, each layer being of a uniform thickness) in the links of the type described results in the inner and outer layers of each bearing tending to show the greatest fatigue due to the compression induced shear strain. As a consequence, based on this analysis the spherical bearings tend to show early fatigue and failure in those layers.

Accordingly, it is a general object of the present invention to provide an improved laminated bearing which substantially reduces or overcomes the above-noted problems.

Another, more specific object of the present invention is to enhance the life of such laminated bearings by providing a substantially optimized strain distribution throughout the layers within a predetermined range of acceptable compression spring rates.

And another object of the present invention is to provide an improved vertical link of the type including a pair of laminated bearings designed to carry a more optimum strain distribution throughout its elastomeric layers while having a compression spring rate within a predetermined range.

And another object of the present invention is to provide an improved coupling of the type described for transmitting torque and accommodating shearing motions from a drive shaft to a multiple blade assembly.

Yet another object of the present invention is to provide an improved aircraft comprising such a coupling.

These and other objects of the present invention are achieved by an improved bearing for coupling a first member to a second member and particularly adapted to be used in an aircraft. The bearing comprises a plurality of alternating layers of a resilient, elastomeric material and a non-extensible material coaxially formed around a common axis. Each of the layers is formed so as have an inner radial surface and an outer radial surface relative to the axis.

Each of the innermost and outermost layers of resilient, elastomeric material is adapted to be coupled to a respective one of the members, and has at least a center portion in which the inner radial and outer radial surfaces of the center portion of each of the innermost and outermost layers is formed as a surface of revolution around the axis with a curvature having respective axial cross-sectional circular shapes defined by different centers of curvature so as to reduce the compression induced shear strain carried by the innermost and outermost layers when the layers are subjected to compression induced shear.

Other objects of the invention will in part be obvious and will in part appear hereinafter. The invention accordingly comprises the apparatus possessing the construction, combination of elements and arrangement of parts exemplified in the following detailed disclosure, and the scope of the application of which will be indicated in the claims.

For a fuller understanding of the nature and objects of the present invention, reference should be had to the following detailed description taken in connection with the accompanying drawings wherein:

3

Fig. 1 is an exploded view of the three-link coupling presently utilized in a multi-purpose aircraft of the type previously described, except that certain hub springs have been omitted for purposes of exposition;

Fig. 2 is an axial, cross-sectional view of the coupling of Fig. 1, including the hub springs and taken along the center axis of the drive shaft that drives the coupling;

Fig. 3 is a top view of one of the links shown in Fig. 1;

Fig. 4 is a cross-sectional view taken along line 4-4 of Fig. 3 showing a pair of laminated bearings of the type described with respect to Fig. 5 and provided in each link; and

Fig. 5 is an enlarged and partial axial cross-sectional view taken through one of the preferred laminated bearings shown in Fig. 4.

In the drawings the same numerals are used to designate the same or similar parts.

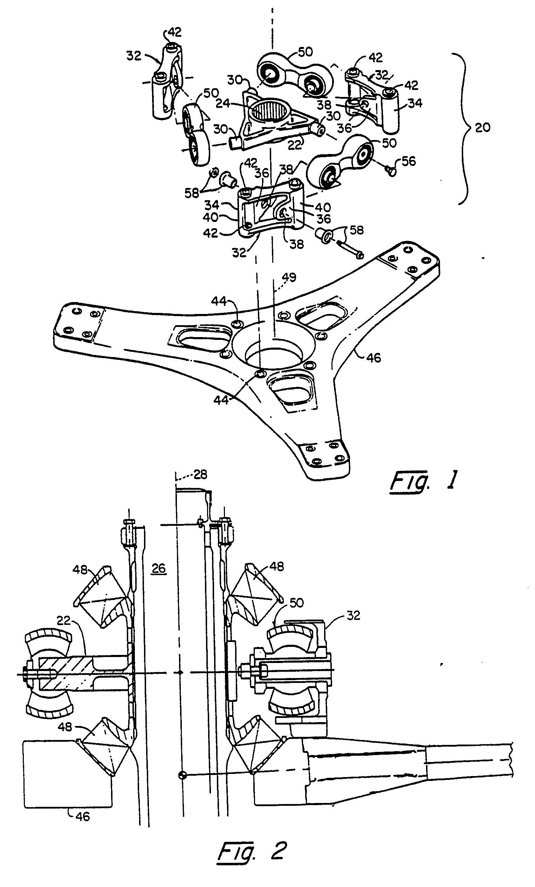

Figs. 1 and 2 show the three-link coupling 20 utilized in the proprotor hub assembly of a multi-purpose aircraft known as the V-22. The coupling 20 includes a drive trunnion 22 coupled to the first member (shown as the drive shaft 26 in Fig. 2), three pillow blocks 32 for coupling the hub assembly to the second member (shown in Figs. 1 and 2 as a yoke 46, which in turn is coupled to the multiple blade assembly, the latter not being shown in the drawings), and three "vertical" links 50 coupled between the trunnion and pillow blocks for accommodating angular and axial misalignment between the first and second members.

The drive trunnion 22 (best shown in Fig. 1) has a cylindrical opening 24 for receiving a first member in the form of drive shaft 26 (see Fig. 2). The trunnion is fixed to and rotates with the drive shaft, wherein the cylindrical axis of opening 24 is coaxial with the drive axis 28 of drive shaft 26. Trunnion 22 also includes three posts 30 spaced approximately 120 apart extending in a direction substantially tangential to the cylindrical wall of the opening 24 all within the same general plane normal to the cylindrical axis of the opening 24.

Coupling 20 also includes three pillow blocks 32. Each block 32 includes a rectangular frame 34 integrally formed with a pair of spaced-apart flanges 36, with each flange being provided with an opening 38. The frame 34 includes sides 40 provided with aligned apertures 42 for receiving bolts (not shown), the latter being adapted to extend through the apertures 42 so as to suitably secure the coupling to suitable upper and lower hub springs 48. Springs 48 are coupled to the apertures 44 of the yoke 46 (see Fig. 1) so that the yoke is mounted with respect to the drive shaft 26 such that the yoke axis 49 (which defines the rotation axis of the blade assembly) is coaxial with the axis 28 when the multiple blade assembly is allowed to rotate in a plane normal to the drive axis (i.e., the flapping angle is zero). Flanges 36 respectively extend from each side 40 at an angle to the general plane of the rectagular frame 36 so that the flanges are generally parallel to one another and the apertures 38 of the two flanges are axially aligned with one another.

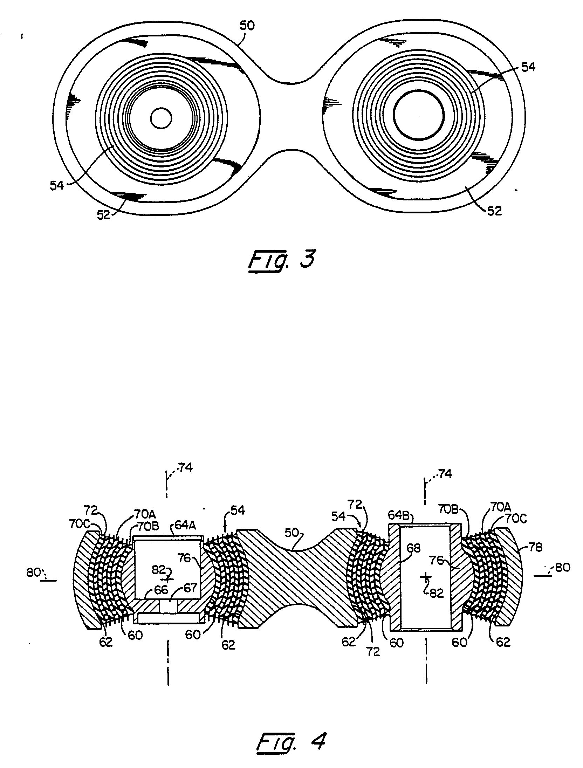

The coupling 20 also comprises three "vertical" links 50. Each link (shown alone in Fig. 3) includes a pair of openings 52 for respectively receiving a pair of laminated bearings 54. The pair of bearings 54 of each link is secured in the respective openings 52 so that the center axes 74 of the two are parallel to one another (as seen in Fig. 4). One of the bearings is secured to one of the posts 30 of the drive trunnion 22 by screws 56 (one being shown in Fig. 1) extending through the bearing into the post. The other of the bearings is secured between the two flanges 36 of a pillow block, wherein a bolt assembly 58 (one being shown in Fig. 1) extends through the bearing and the openings 38 so as to hold the bearing inbetween the two flanges. Each bearing is positioned between an inner and outer bearing surface with the inner bearing surface 60 being provided by the inner race 64, and the outer bearing surface 62 being provided by the inner surface of the link 50 defined by the opening 52.

To the extent described thus far, the coupling is known. When the rotation axis 49 of the yoke and multiple blade assembly is deflected by suitable controls (not shown) which are well known in the art, so as to create a flapping angle of the rotation plane of the yoke and multiple blade assembly with respect to the axis 28 of the shaft 26, the coupling will not function as a true constant velocity coupling. As the links 50 rotate about the tilted axis 49, they move up and down through the plane through which the yoke 46 and multiple blade assembly move when the rotating yoke 46 and multiple blade assembly are not pitched. This results in each link moving in torsion, resulting in oscillating deflection in each of the links 50. By using relatively soft elastomeric material for each of the layers of elastomeric material, the rotating plane of the yoke and multiple blade assembly can be changed relative to the axis 28 of the drive shaft 26, without the rotational velocity of the yoke and multiple blade assembly noticably fluctuating. However, each bearing 54 will experience oscillating bulging in response to compression forces resulting from kinematic error as the yoke and multiple blade assembly move through the inclined plane. The elastomeric material is therefore more proned to fatigue. Based upon finite elements analysis, it was found that a state of the art spherical elastomeric bearing (of the type having a plurality of elastomeric layers, each layer being of uniform

4

thickness, and curved with the same center of curvature located at the same spatial position at the geometric center of the bearing on the center axis of the bearing) is not completely satisfactory for this, type of application. Apparently, the innermost and outermost layers of the resilient, elastomeric material of the spherical bearings tend to fatigue more quickly, since they appear to carry greater compression induced shear strain due to kinematic errors.

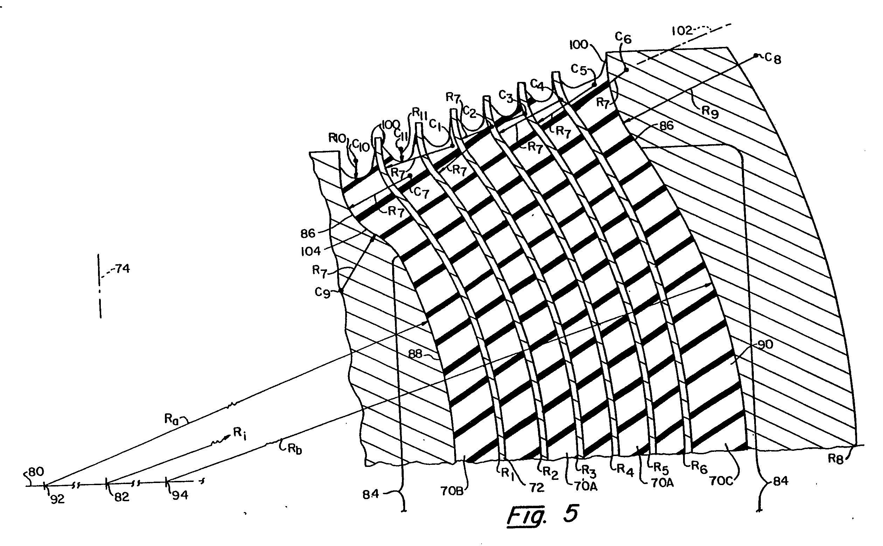

Accordingly, each of the two bearings in each of the links 50 is modified in accordance with the present invention, as is described hereinafter in connection with Figs. 3-5, so that compression induced shear strain is carried more evenly by each of the elastomeric layers. As shown in Figs. 4 and 5, the preferred embodiment of the laminated bearing 54 of the present invention is disposed between the inner and outer bearing surfaces 60 and 62 respectively formed on the inner ring 64 and the portion of the link 50 defining the opening 52. The link 50, the inner ring '64A for attachment to a post 30 of the trunnion 22, and inner ring 64B for attachment to a pillow block are identical to the corresponding prior art components, except that the inner and outer bearing surfaces 60 and 62 are formed in accordance with the teachings of the present invention. As shown the ring 64A includes the inner radially directed flange 66 with a center aperture 67 for receiving and holding the screw 56 when secured to a post 30, while ring 64B includes an inner hollow cylindrical passageway 68 large enough so that when the ring is positioned between the flanges 36 of the pillow block 32 the bolt assembly 58 can extend through the passageway and hold the ring between the flanges.

The laminated bearing includes alternating layers 70 and 72, respectively of a resilient, elastomeric material and a non-extensible material. The inner and outer radial surfaces of the layers, as well as the bearing surfaces 60 and 62, are formed as surfaces of revolution around and are coaxial with the center bearing axis 74. The actual size, number, and thickness of the elastomeric and non-extensible layers, as well as the shear modulus of each layer of elastomeric material can vary depending, for example, on the particular compression loads to be expected and the amount of angular misalignment between the axis 28 of the drive shaft 26 and the axis 49 of the plane of rotation of the multiple blade assembly that can be tolerated. Each layer 70 and 72 is symmetrically positioned about and bisected by a common bisecting plane 80 normal to axis 74. The plane 80 intersects the axis 74 at the intersection point 82. Each layer of elastomeric and non-extensible material is preferably formed in accordance with the present invention to more evenly distribute the bulge or compression induced shear strain through the layers of elastomeric material 70.

As shown, each layer 70 and 72 includes an inner and outer radial surface. The non-extensible layers 72 are each of a uniform thickness and configured to mate with the respective outer and inner radial surfaces of the respective elastomeric layers to which each non-extensible layer is attached. As best shown in Fig. 5, the inner and outer radial surfaces of each of the elastomeric layers each include a center portion 84 integrally formed with opposite end portions 86 to define each layer 70, each layer being symmetrical about the bisecting plane 80. The center portions of the inner and outer radial surfaces of the intermediate elastomeric layers 70A, as well as the center portions of the outer radial surface of the innermost layer 70B and the inner radial surface of the outermost layer 70C, are each preferably formed as a spherical surface in axial cross section and revolved around the center bearing axis 74. The outer radial surface of the innermost layer 70B, the inner and outer radial surfaces of the center portions of all of the intermediate layers 70A and the inner radial surface of the outermost layer 70C each have its center of curvature at the intersection point 82 so that its radius of curvature $R_i$ (shown in Fig. 5) increases with each successive layer from the intersection point 82. As shown in Fig. 5 the radius of curvature of the outer radial surface of the center portion of the innermost layer is designated $R_1$, the radius of curvature of the inner radial surface of the center portion of the next adjacent layer 70A will be $R_1$ plus the thickness of the nonextensible layer 72 disposed therebetween, the radius of curvature of the outer radial surface of the center portion of the layer 70A is designated $R_2$, etc.

The center portions of the inner of the innermost elastomeric layer 70B and the outer radial surface 90 of the outermost elastomeric layer 70C are each formed as an arc of a circle in axial cross section and revolved around the center bearing axis 74, except that the centers of curvature 92 and 94 of the two respective surfaces 88 and 90 are displaced from the intersection point 82, so that the thicknesses of the center portions of the innermost and outermost layers 70B and 70C vary from the plane 80 toward the opposite edges of each layer. In particular, the radius of curvature of the center portion of the inner radial surface 88 of the innermost layer 70B (indicated as $R_a$ in Fig. 5) is larger than the distance between the intersect point 82 and the layer 70B so that the center of curvature (indicated at 92 in Fig. 5) of the arc of the circle defining the center portion of the inner radial surface 88 is disposed on a circle of loci of points coaxial with the axis 74 disposed in the plane 80. The radius of curvature of the center portion of the outer radial surface 90 of the outermost layer 70C (indicated $R_b$ in Fig. 5) is smaller than the distance between the intersection point 82 and that the center of curvature (indicated at 94 in Fig. 5) of the arc of the circle defining the center portion of the outer radial surface 90 is also disposed on a circle of loci of points coaxial with the axis 74 disposed in the plane 80.

In addition to the above described geometry of the center portions of each of the layers 70 in order to more evenly accommodate strain due to outer edge bulge at the edge of each of the layers 70 (a) both end portions 86 of each layer are also preferably shaped so that the curvature of at least a portion of the inner and outer radial surfaces of each end portion is opposite to that of the corresponding center portion 84, (b) the end portions 86A and 86B of the innermost and outermost layers are preferably respectively made thicker than the corresponding portions of the intermediate layers, and (c) the ends of each elastomeric layer 70 are preferably provided with an inwardly directed cut, indicated at 100.

More specifically, at least a portion of the axial cross-sectional shape of each inner and outer radial surface of each end portion is formed as an arc of a circle having a center of curvature located on the opposite side of the surface from the center axis 74. The centers of curvature of the arc of the circle defining the portion of the inner radial surface of the end portion of each intermediate layer and the outermost layer are indicated $C_1$, $C_2$, $C_3$, $C_4$, $C_5$ and $C_6$. The centers of curvature $C_1$, $C_2$, $C_3$, $C_4$, $C_5$ and $C_6$ lie on a common line 102. The centers of curvature of the axial cross-sectioned circular the outer portions of the outer radial surfaces of innermost layer and the intermediate layers is disposed on line 102 and respectively displaced from the centers of curvature $C_1$, $C_2$, $C_3$, $C_4$, $C_5$ and $C_6$ by a distance equal to the thickness of the non-extensible layers disposed therebetween. The radii of curvature of each of the axial cross-sectioned circular arcuate parts of the outer end portions of the inner radial surfaces of the intermediate layer and the outermost layer, and the outer radial surfaces of the innermost layer and the intermediate layers is provided with substantially the same radius of curvature $R_7$. The centers of curvature $C_7$ and $C_8$ of the respective axial cross-sectioned circular arcuate part of the end portions of the inner and outer radial surfaces 88 and 90 are disposed between the line 102 and the plane 80 at locations such that the radii of curvature of the axial cross-sections of each of the axial cross-sectiond circular arcuate part of the end portions of the respective surfaces 88 and 90 are respectively the same as and larger than $R_7$, as indicated by $R_7$ and $R_8$. In addition, the inner radial surface of the innermost layer 70B is provided transitional surface portion having a center of curvature $C_9$ and a radius of curvature $R_7$. Since the inner and outer surfaces of the elastomeric layers 70 are surfaces of revolution around the center bearing axis 74, all of the centers of curvature of the surfaces of each of the inner and outer radial surfaces of the end portions each lie on a circle of loci of points coaxial with the axis 74.

Thus, as best shown in Fig. 5 end portions of the intermediate layers 70A are such that each intermediate layer is substantially the same thickness as, or slightly thicker at its edges than its center portion. Plane 80 is the location of the maximum thickness of the innermost and outermost layers. The innermost and outermost layers have a portion between the plane 80 and each of the end portion 84 that is "necked" down, i.e., reduced in thickness, with each of the end portions 86 being "flared" out, i.e., increased in thickness. The maximum thickness of the end portions 86 of each of the innermost and outermost layer is approximately the same as the thickness of the portion of the respective layer at the plane 80, with the "necked" down portion transitioning smoothly between the two regions.

The inwardly directed cut 100 formed around the edge of each of at least some of the elastomeric layers is preferably formed so that the strain distribution at the edge will be more uniform as the elastomeric layer is subjected to compression forces and begins to bulge. Preferably, the edges of the innermost layer 70B is provided with a cut having an axial cross-sectional shape in the form of a circle having a center of curvature at $C_{10}$ and a radius of curvature of $R_{10}$. The edges of each of the intermediate layers 70A are cut to have cross-sectional shape in the form of a circle, each having a center of curvature at $C_{11}$ and a radius of curvature of $R_{11}$.

The following TABLE I is a listing of the relative location of various points of a bearing designed in accordance with the present invention, wherein the coordinates of each point is given in X and Y coordinates relative to the point 82, with the X coordinate being shown in Fig. 5 in a horizotal direction, and the Y coordinate being shown in the vertical direction:

TABLE I

| Rad. or pt. location | Coordinates |
|---|---|
| 82 | 0.000, 0.000 |
| 88 | -0.345, 0.000 |
| 90 | 0.420, 0.000 |
| $C_1$ | 1.3745554, 1.075 |
| $C_2$ | 1.500, 1.125 |
| $C_3$ | 1.630, 1.16237 |
| $C_4$ | 1.745, 1.21618 |
| $C_5$ | 1.865, 1.26047 |
| $C_6$ | 1.9788, 1.30975 |
| $C_7$ | 1.230, 0.980 |
| $C_8$ | 2.40731, 1.32767 |
| $C_9$ | 0.984589, 0.590927 |

The various radii indicated in Fig. 5 have the following relative values shown in TABLE II:

TABLE II

| RADIUS | Rel Dim. |
|---|---|
| $R_a$ | 1.685 |
| $R_b$ | 1.890 |
| $R_1$ | 1.495 |
| $R_2$ | 1.625 |
| $R_3$ | 1.752 |
| $R_4$ | 1.877 |
| $R_5$ | 2.001 |
| $R_6$ | 2.123 |
| $R_7$ | 2.685 |
| $R_8$ | 0.230 |
| $R_9$ | 0.500 |
| $R_{10}$ | 0.050 |
| $R_{11}$ | 0.040 |

In the embodiment provided by the values of TABLE I and TABLE II, the typical thickness of each layer 72 of non-extensible material is of a relative thickness of 0.020.

A comparative computer analysis was made between a bearing having seven elastomeric layers of the same elastomeric material and designed in accordance with the present invention and the equivalent spherical bearing. The analysis was made in which the strains on each bearing was based on a radial compressive load of 37,000 pounds. The following TABLE III shows the bulge profile of the conventional seven layer spherical bearing, while TABLE IV shows the bulge profile of the same bearing modified according to the present invention, wherein the values of compression induced shear strain (CISS) are given for layers 1-7, and the layers are numbered consecutively from the innermost layer to the outermost layer.

7

EP 0 306 027 A2

TABLE III

| Layer | CISS |
|-------|------|
| 1 | 495 |
| 2 | 368 |
| 3 | 364 |
| 4 | 363 |
| 5 | 366 |
| 6 | 364 |
| 7 | 498 |

TABLE IV

| Layer | CISS |
|-------|------|
| 1 | 311 |
| 2 | 350 |
| 3 | 348 |
| 4 | 346 |
| 5 | 348 |
| 6 | 343 |
| 7 | 200 |

As is evident from TABLES III and IV the bearing made in accordance with the present invention is believed capable of reducing the bulge strain in the innermost and outermost layers of elastomeric material so as to more evenly carry compression induced shear strain in each elastomeric layer then heretofore provided by the spherical bearing when used in the vertical links of the hub assembly of the proprotor assembly shown.

Since certain other changes may be made in the above apparatus without departing from the scope of the invention herein involved, it is intended that all matter contained in the above description or shown in the accompanying drawing shall be interpreted in an illustrative and not in a limiting sense.

**Claims**

1. A bearing for coupling a first member to a second member, said bearing comprising:
a plurality of alternating layers of a resilient, elastomeric material and a non-extensible material coaxially formed around a common axis, wherein each of said layers is formed so as have an inner radial surface and an outer radial surface relative to said axis, and said plurality of layers includes innermost and outermost layers of resilient, elastomeric material;
wherein each of said innermost and outermost layers of said resilient, elastomeric material has at least a center portion in which the inner radial and outer radial surfaces of said center portion of each of the innermost and outermost layers is formed as a surface of revolution around said axis with a curvature having respective axial cross-sectional circular shapes defined by different centers of curvature so as to reduce the compression induced shear strain carried by said innermost and outermost layers when said layers are subjected to compression induced shear.

2. A bearing according to claim 1, wherein (1) each of said layers is formed symmetrically about a common plane (a) normal to said axis and (b) bisecting each layer through each said center portion, said axis intersects said plane at an intersection point, (2) the center of curvature of the axial cross-sectional shape of each of the outer radial surface of the center portion of said innermost layer and the inner radial surface of the center portion of said outermost layer is coincident with said intersection point; (3) the radius of curvature of the axial cross-sectional shape of said inner radial surface of the center portion of said innermost layer is larger than the distance between said intersection point and said innermost layer so that the center of curvature of said axial cross-sectional shape of said inner radial surface of the center portion of said innermost layer is disposed on a circle of loci of points coaxial with said axis and disposed in said

8

common plane; and (4) the radius of curvature of the axial cross-sectional shape of said outer radial surface of the center portion of said outermost layer is smaller than the distance between said intersection point and said outermost layer so that the center of curvature of said axial cross-sectional shape of said outer radial surface of said center portion of said outermost layer is disposed on a circle of loci of points coaxial with said axis and disposed in said common plane.

3. A bearing according to claim 2, wherein said plurality of alternating layers includes at least one intermediate layer of resilient, elastomeric material (a) disposed between said innermost and outermost layers, and (b) having at least a center portion in which the inner radial surface and the outer radial surface of said center portion of said intermediate layer is formed with a spherical curvature defined by the same center of curvature coincident with said intersection point.

4. A bearing according to claim 1, wherein each of said layers of said nonextensible material is of a substantially constant thickness.

5. A bearing according to claim 2, wherein each of said layers of resilient, elastomeric material includes opposite end portions extending from said center portion of each layer on opposite sides of said plane, and the edges of the end portions of each said resilient, elastomeric material are formed with an inwardly directed cut.

6. A bearing according to claim 5, wherein each of said inwardly directed cuts is a substatially cylindrical cut.

7. A bearing according to claim 2, wherein each of said layers of resilient, elastomeric material includes opposite end portions extending from said center portion of each layer on opposite sides of said plane, said end portions of said innermost and outermost layers are each formed with at least a portion of an enlarged thickness relative to the thickness of the center portion where the center portion is formed with said end portion.

8. A bearing according to claim 7, wherein at least a part of the inner and outer radial surfaces of each of said end portions of each layer is provided with a curvature of a type opposite to the curvature of the inner and outer radial surfaces of each corresponding center portion, such that the center of curvature of the axial cross section of each said part of the inner and outer radial surfaces of the end portions is disposed on side of the corresponding layer opposite to said axis.

9. A bearing according to claim 8, wherein said inner radial surface of said end portion of said innermost layer includes a transition surface between each of said end portions and said center portion, said transition surface including a curvature of a type the same as center portion, but opposite to said end portion.

10. A bearing according to claim 7, wherein each of said opposite end portions are formed with an inwardly directed cut.

11. A bearing according to claim 10, wherein each of said inwardly directed cuts is a substantially cylindrical cut.

12. A link assembly for use in a coupling for coupling a first member to a second member, said link assembly comprising:
a link element including at least two apertures having center axes oriented parallel to one another, each of said apertures defining an outer bearing surface;
a pair of inner race elements, each defining an inner bearing surface and disposed in a respective one of said apertures of said link so that the inner bearing surface of each race element opposes an outer bearing surface of said link element;
a pair of bearings, each disposed between and secured to a respective opposing inner and outer bearing surfaces, each of said bearings comprising a plurality of alternating layers of a resilient, elastomeric material and a non-extensible material coaxially formed around a common axis, wherein each of said layers is formed so as have an inner radial surface and an outer radial surface relative to said axis, and said plurality of layers includes innermost and outermost layers of resilient, elastomeric material;
wherein each of said innermost and outermost layers of said resilient, elastomeric material of each of said bearings has at least a center portion in which the inner radial and outer radial surfaces of said center portion of each of the innermost and outermost layers is formed as a surface of revolution around said axis with a curvature having respective axial cross-sectional circular shapes defined by different centers of curvature so as to reduce the compression induced shear strain carried by said innermost and outermost layers when said layers are subjected to compression induced shear.

13. A link assembly according to claim 12, wherein (1) each of said layers is formed symmetrically about a common plane (a) normal to said axis and (b) bisecting each layer through each said center portion, said axis intersects said plane at an intersection point, (2) the center of curvature of the axial cross-sectional shape of each of the outer radial surface of the center portion of said innermost layer and the inner radial surface of the center portion of said outermost layer is coincident with said intersection point; (3) the radius of curvature of the axial cross-sectional shape of said inner radial surface of the center portion of said innermost layer is larger than the distance between said intersection point and said innermost layer so that the center of curvature of said axial cross-sectional shape of said inner radial surface of the center portion of said innermost layer is disposed on a circle of loci of points coaxial with said axis and disposed in said common plane; and (4) the radius of curvature of the axial cross-sectional shape of said outer radial surface of the center portion of said outermost layer is smaller than the distance between said intersection point and said outermost layer so that the center of curvature of said axial cross-sectional shape of said outer radial surface of said center portion of said outermost layer is disposed on a circle of loci of points coaxial with said axis and disposed in said common plane.

14. A link assembly according to claim 13, wherein said plurality of alternating layers includes at least one intermediate layer of resilient, elastomeric material (a) disposed between said innermost and outermost layers, and (b) having at least a center portion in which the inner radial surface and the outer radial surface of said center portion of said intermediate layer is formed with a spherical curvature defined by the same center of curvature coincident with said intersection point.

15. A link assembly according to claim 12, wherein each of said layers of said nonextensible material is of a substantially constant thickness.

16. A link assembly according to claim 13, wherein each of said layers of resilient, elastomeric material includes opposite end portions extending from said center portion of each layer on opposite sides of said plane, and the edges of the end portions of each said resilient, elastomeric material are formed with an inwardly directed cut.

17. A link assembly according to claim 16, wherein each of said inwardly directed cuts is a substatially cylindrical cut.

18. A link assembly according to claim 13, wherein each of said layers of resilient, elastomeric material includes opposite end portions extending from said center portion of each layer on opposite sides of said plane, said end portions of said innermost and outermost layers are each formed with at least a portion of an enlarged thickness relative to the thickness of the center portion where the center portion is formed with said end portion.

19. A link assembly according to claim 18, wherein at least a part of the inner and outer radial surfaces of each of said end portions of each layer is provided with a curvature of a type opposite to the curvature of the inner and outer radial surfaces of each corresponding center portion, such that the center of curvature of the axial cross section of each said part of the inner and outer radial surfaces of the end portions is disposed on side of the corresponding layer opposite to said axis.

20. A link assembly according to claim 19, wherein said inner radial surface of said end portion of said innermost layer includes a transition surface between each of said end portions and said center portion, said transition surface including a curvature of a type the same as center portion, but opposite to said end portion.

21. A link assembly according to claim 18, wherein each of said opposite end portions are formed with an inwardly directed cut.

22. A link assembly according to claim 21, wherein each of said inwardly directed cuts is a substantially cylindrical cut.

23. A coupling assembly for coupling a first member to a second member, said coupling assembly comprising:
a trunnion for coupling said assembly to a one of said members;
three pillow blocks for coupling said assembly to the other of said members; and
three link assemblies for respectively coupling each of said pillow blocks to said trunnion, each of said link assemblies including (a) at least two apertures having center axes oriented parallel to one another, each of said apertures defining an outer bearing surface, (b) a pair of inner race elements for respectively coupling said link assembly to said trunnion and a respective one of said pillow blocks, each of said inner race elements defining an inner bearing surface and disposed in a respective one of said apertures of said link so that the inner bearing surface of each race element opposes an outer bearing surface of said link element, and (c) a pair of bearings, each disposed between and secured to a respective opposing inner and outer bearing surfaces, each of said bearings comprising a plurality of alternating layers of a resilient, elastomeric material and a non-extensible material coaxially formed around a common axis, wherein each of said layers is formed so as have an inner radial surface and an outer radial surface relative to said axis, and said plurality of layers includes innermost and outermost layers of resilient, elastomeric material;
wherein each of said innermost and outermost layers of said resilient, elastomeric material of each of said bearings has at least a center portion in which the inner radial and outer radial surfaces of said center portion of each of the innermost and outermost layers is formed as a surface of revolution around said axis with a curvature having respective axial cross-sectional circular shapes defined by different centers of curvature so as to reduce the compression induced shear strain carried by said innermost and outermost layers when said layers are subjected to compression induced shear.

24. A coupling assembly according to claim 23, wherein (1) each of said layers is formed symmetrically about a common plane (a) normal to said axis and (b) bisecting each layer through each said center portion, said axis intersects said plane at an intersection point, (2) the center of curvature of the axial cross-sectional shape of each of the outer radial surface of the center portion of said innermost layer and the inner radial surface of the center portion of said outermost layer is coincident with said intersection point; (3) the radius of curvature of the axial cross-sectional shape of said inner radial surface of the center portion of said innermost layer is larger than the distance between said intersection point and said innermost layer so that the center of curvature of said axial cross-sectional shape of said inner radial surface of the center portion of said innermost layer is disposed on a circle of loci of points coaxial with said axis and disposed in said common plane; and (4) the radius of curvature of the axial cross-sectional shape of said outer radial surface of the center portion of said outermost layer is smaller than the distance between said intersection point and said outermost layer so that the center of curvature of said axial cross-sectional shape of said outer radial surface of said center portion of said outermost layer is disposed on a circle of loci of points coaxial with said axis and disposed in said common plane.

25. A coupling assembly according to claim 24, wherein said plurality of alternating layers includes at least one intermediate layer of resilient, elastomeric material (a) disposed between said innermost and outermost layers, and (b) having at least a center portion in which the inner radial surface and the outer radial surface of said center portion of said intermediate layer is formed with a spherical curvature defined by the same center of curvature coincident with said intersection point.

26. A coupling assembly according to claim 23, wherein each of said layers of said nonextensible material is of a substantially constant thickness.

27. A coupling assembly according to claim 24, wherein each of said layers of resilient, elastomeric material includes opposite end portions extending from said center portion of each layer on opposite sides of said plane, and the edges of the end portions of each said resilient, elastomeric material are formed with an inwardly directed cut.

28. A coupling assembly according to claim 27, wherein each of said inwardly directed cuts is a substatially cylindrical cut.

29. A coupling assembly according to claim 24, wherein each of said layers of resilient, elastomeric material includes opposite end portions extending from said center portion of each layer on opposite sides of said plane, said end portions of said innermost and outermost layers are each formed with at least a portion of an enlarged thickness relative to the thickness of the center portion where the center portion is formed with said end portion.

30. A coupling assembly according to claim 29, wherein at least a part of the inner and outer radial surfaces of each of said end portions of each layer is provided with a curvature of a type opposite to the curvature of the inner and outer radial surfaces of each corresponding center portion, such that the center of curvature of the axial cross section of each said part of the inner and outer radial surfaces of the end portions is disposed on side of the corresponding layer opposite to said axis.

31. A coupling assembly according to claim 30, wherein said inner radial surface of said end portion of said innermost layer includes a transition surface between each of said end portions and said center portion, said transition surface including a curvature of a type the same as center portion, but opposite to said end portion.

32. A coupling assembly according to claim 29, wherein each of said opposite end portions are formed with an inwardly directed cut.

33. A coupling assembly according to claim 32, wherein each of said inwardly directed cuts is a substatially cylindrical cut.

34. An aircraft of the type including a coupling assembly for coupling a first member to a second member, said coupling assembly comprising:
a trunnion for coupling said assembly to a one of said members;
three pillow blocks for coupling said assembly to the other of said members; and
three link assemblies for respectively coupling each of said pillow blocks to said trunnion, each of said link assemblies including (a) at least two apertures having center axes oriented parallel to one another, each of said apertures defining an outer bearing surface, (b) a pair of inner race elements for respectively coupling said link assembly to said trunnion and a respective one of said pillow blocks, each of said inner race elements defining an inner bearing surface and disposed in a respective one of said apertures of said link

EP 0 306 027 A2

so that the inner bearing surface of each race element opposes an outer bearing surface of said link element, and (c) a pair of bearings, each disposed between and secured to a respective opposing inner and outer bearing surfaces, each of said bearings comprising a plurality of alternating layers of a resilient, elastomeric material and a non-extensible material coaxially formed around a common axis, wherein each of said layers is formed so as have an inner radial surface and an outer radial surface relative to said axis, and said plurality of layers includes innermost and outermost layers of resilient, elastomeric material; wherein each of said innermost and outermost layers of said resilient, elastomeric material of each of said bearings has at least a center portion in which the inner radial and outer radial surfaces of said center portion of each of the innermost and outermost layers is formed as a surface of revolution around said axis with a curvature having respective axial cross-sectional circular shapes defined by different centers of curvature so as to reduce the compression induced shear strain carried by said innermost and outermost layers when said layers are subjected to compression induced shear.

35. A aircraft according to claim 34, wherein (1) each of said layers is formed symmetrically about a common plane (a) normal to said axis and (b) bisecting each layer through each said center portion, said axis intersects said plane at an intersection point, (2) the center of curvature of the axial cross-sectional shape of each of the outer radial surface of the center portion of said innermost layer and the inner radial surface of the center portion of said outermost layer is coincident with said intersection point; (3) the radius of curvature of the axial cross-sectional shape of said inner radial surface of the center portion of said innermost layer is larger than the distance between said intersection point and said innermost layer so that the center of curvature of said axial cross-sectional shape of said inner radial surface of the center portion of said innermost layer is disposed on a circle of loci of points coaxial with said axis and disposed in said common plane; and (4) the radius of curvature of the axial cross-sectional shape of said outer radial surface of the center portion of said outermost layer is smaller than the distance between said intersection point and said outermost layer so that the center of curvature of said axial cross-sectional shape of said outer radial surface of said center portion of said outermost layer is disposed on a circle of loci of points coaxial with said axis and disposed in said common plane.

36. An aircraft according to claim 35, wherein said plurality of alternating layers includes at least one intermediate layer of resilient, elastomeric material (a) disposed between said innermost and outermost layers, and (b) having at least a center portion in which the inner radial surface and the outer radial surface of said center portion of said intermediate layer is formed with a spherical curvature defined by the same center of curvature coincident with said intersection point.

37. An aircraft according to claim 34, wherein each of said layers of said nonextensible material is of a substantially constant thickness.

38. An aircraft according to claim 35, wherein each of said layers of resilient, elastomeric material includes opposite end portions extending from said center portion of each layer on opposite sides of said plane, and the edges of the end portions of each said resilient, elastomeric material are formed with an inwardly directed cut.

39. An aircraft according to claim 38, wherein each of said inwardly directed cuts is a substatially cylindrical cut.

40. An aircraft according to claim 35, wherein each of said layers of resilient, elastomeric material includes opposite end portions extending from said center portion of each layer on opposite sides of said plane, said end portions of said innermost and outermost layers are each formed with at least a portion of an enlarged thickness relative to the thickness of the center portion where the center portion is formed with said end portion.

41. An aircraft according to claim 40, wherein at least a part of the inner and outer radial surfaces of each of said end portions of each layer is provided with a curvature of a type opposite to the curvature of the inner and outer radial surfaces of each corresponding center portion, such that the center of curvature of the axial cross section of each said part of the inner and outer radial surfaces of the end portions is disposed on side of the corresponding layer opposite to said axis.

42. An aircraft according to claim 41, wherein said inner radial surface of said end portion of said innermost layer includes a transition surface between each of said end portions and said center portion, said transition surface including a curvature of a type the same as center portion, but opposite to said end portion.

43. An aircraft according to claim 40, wherein each of said opposite end portions are formed with an inwardly directed cut.

44. An aircraft according to claim 43, wherein each of said inwardly directed cuts is a substantially cylindrical cut.

EP 0 306 027 A2

Fig. 1

Fig. 2

_Fig._ 3

_Fig._ 4

Fig. 5